# EUROPÄISCHE PATENTSCHRIFT

(11) **EP 1 505 314 B1**
(45) Veröffentlichungstag und Bekanntmachung des Hinweises auf die Patenterteilung: **26.07.2006**
(21) Anmeldenummer: 04015716.6
(22) Anmeldetag: 03.07.2004
(51) Int. Cl.: F16F 9/38, F16F 9/58

(54) **Federkonstruktion**
Suspension construction
Structure de suspension

(30) Priorität: 05.08.2003 DE 10336557
(43) Veröffentlichungstag der Anmeldung: 09.02.2005
(73) Patentinhaber: BASF Aktiengesellschaft, 67056 Ludwigshafen (DE)
(72) Erfinder: Gehring, Tom, 49456 Bakum (DE); Schorling, Manfred, 49406 Eydelstedt (DE)

(56) Entgegenhaltungen:
- DE-C- 4 440 808
- DE-C- 10 008 140
- FR-A- 2 249 266
- PATENT ABSTRACTS OF JAPAN Bd. 0121, Nr. 57 (M-696), 13. Mai 1988 (1988-05-13) -& JP 62 275811 A (NISSAN MOTOR CO LTD; others: 01), 30. November 1987 (1987-11-30)
- PATENT ABSTRACTS OF JAPAN Bd. 2003, Nr. 11, 5. November 2003 (2003-11-05) & JP 2003 194129 A (FUJI HEAVY IND LTD), 9. Juli 2003 (2003-07-09)
- PATENT ABSTRACTS OF JAPAN Bd. 2000, Nr. 06, 22. September 2000 (2000-09-22) & JP 2000 088031 A (TOKAI RUBBER IND LTD), 28. März 2000 (2000-03-28)

## Beschreibung

Die Erfindung betrifft Federkonstruktionen enthaltend ein Befestigungselement (x), in dem ein hohles bevorzugt zylindrisches bevorzugt elastisches Dämpfungselement (i) positioniert ist, sowie ein Schutzrohr (xx), das an dem Befestigungselement (x) befestigt ist und in dem das hohle Dämpfungselement (i) platziert wird, wobei das Schutzrohr (XX) beweglich an dem Befestigungselement (X) befestigt ist, wobei das Schutzrohr (XX) an zwei Stellen mit dem Befestigungselement (X) schwenkbar befestigt ist. Des weiteren bezieht sich die Erfindung auf Automobile, beispielsweise Personenkraftwagen, Lastkraftwagen, Busse, bevorzugt Automobilfahrwerke enthaltend die erfindungsgemäße Federkonstruktion.

Aus Polyurethanelastomeren hergestellte Federungselemente werden in Automobilen beispielsweise innerhalb des Fahrwerks verwendet und sind allgemein bekannt. Sie werden insbesondere in Kraftfahrzeugen als schwingungsdämpfende Federelemente eingesetzt. Dabei übernehmen die Federelemente eine Endanschlagfunktion, beeinflussen die Kraft-Weg-Kennung des Rades durch das Ausbilden oder Verstärken einer progressiven Charakteristik der Fahrzeugfederung. Die Nickeffekte des Fahrzeuges können reduziert werden und die Wankabstützung wird verstärkt. Insbesondere durch die geometrische Gestaltung wird die Anlaufsteifigkeit optimiert, dies hat maßgeblichen Einfluss auf den Federungskomfort des Fahrzeuges. Durch die gezielte Auslegung der Geometrie ergeben sich über der Lebensdauer nahezu konstante Bauteileigenschaften. Durch diese Funktion wird der Fahrkomfort erhöht und ein Höchstmaß an Fahrsicherheit gewährleistet. Häufig kommen zusätzlich zu sogenannten Zusatzfedern, die üblicherweise auf der Kolbenstange des Stoßdämpfers platziert werden, Dämpferlager, auch als Rundlager bezeichnet, zum Einsatz, die die Kolbenstange elastisch mit der Karosserie verbinden. In der Regel werden die Zusatzfeder und das Rundlager in Befestigungselementen, sogenannten Befestigungstöpfen fixiert, die wiederum beispielsweise mit der Fahrzeugkarosserie verbunden sein können.

Sowohl Zusatzfeder als auch das oder die Lagerelemente in den Rundlagern bestehen in der Regel aus elastischen Materialien, deren elastische Eigenschaften aufgrund der äußeren Einflüsse, denen das Fahrwerk eines Kraftfahrzeuges ausgesetzt ist, leiden könne. Deswegen werden die Zusatzfedern häufig durch sogenannte Schutzrohre geschützt, in denen die Zusatzfedern platziert werden und die häufig als Faltenbälge ausgestaltet sind. Die Befestigung der Schutzrohre kann dabei sowohl an den Zusatzfedern als auch am Befestigungstopf erfolgen.

JP 62275811 A und JP 2003 194 129 offenbaren Federkonstruktionen mit Faltenbalgen.

Nachteilig an den bekannten Systemen ist, dass die bekannten Schutzrohre entweder wie z.B. im Falle der Faltenbälge einen zu großen Platzbedarf aufweisen oder aber unter Belastung eine zu geringe Flexibilität besitzen und deshalb die Dämpfer der Achse (Abblättern der Lackierung) schädigen, bzw. Geräusche verursachen können.

Aufgabe der vorliegenden Erfindung war es, eine neue platzsparende Schutzvorrichtung für eine Zusatzfeder insbesondere im Automobilfahrwerk zu entwickeln, die die Zusatzfeder hervorragend gegen äußere Einflüsse abschirmt und zudem die o.g. Probleme beseitigt.

Diese Aufgaben konnten durch die eingangs dargestellten Federkonstruktionen gelöst werden. Dabei weisen die Federkonstruktionen bevorzugt ein Rundlager enthaltend mindestens ein hohles, elastisches bevorzugt zylindrisches oder rundes Lagerelement (iii) sowie einen bevorzugt runden, bevorzugt mit einer mittigen Bohrung versehenen, bevorzugt flachen Einleger (iv), auf, das in dem Befestigungselement (x) positioniert ist. Bei dem Rundlager wird der Einleger (iv) bevorzugt oberhalb und unterhalb durch das oder die Lagerelemente (iii) elastisch gelagert.

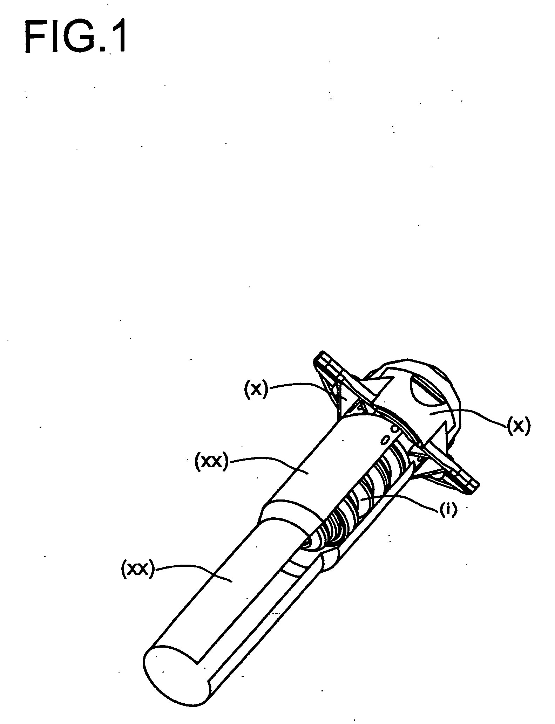

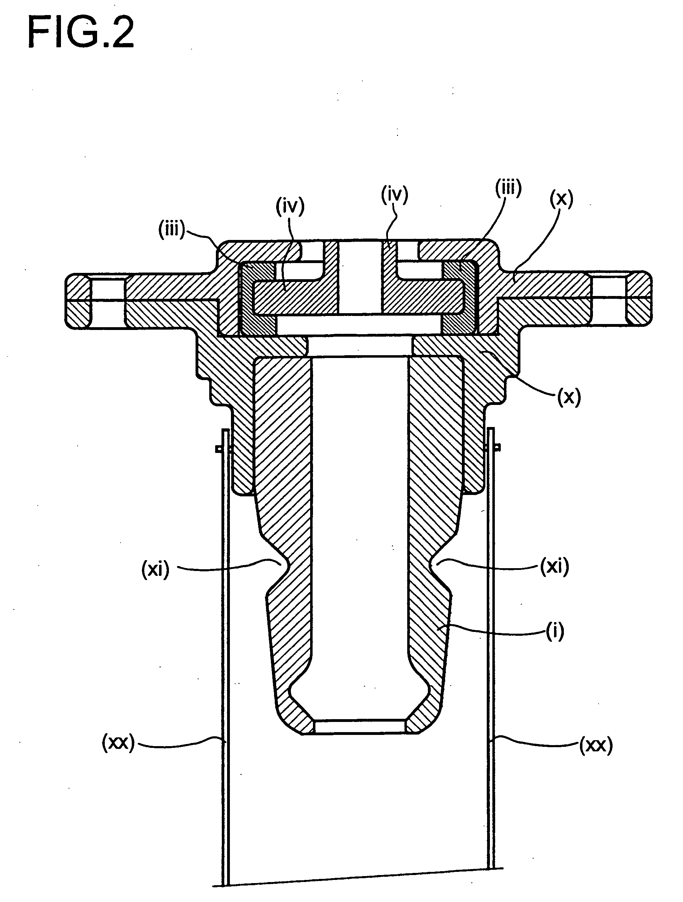

Eine beispielhafte, erfindungsgemäße Federkonstruktion ist im Detail in einer Übersicht in der Figur 1 dargestellt. In der Figur 2 ist eine beispielhafte erfindungsgemäße Konstruktion im Querschnitt dargestellt, wobei in diesem Falle, entgegen der besonders bevorzugten Ausführungsform (siehe Figur 1), das Schutzrohr nicht an der Zusatzfeder anliegt.

Der Vorteil in der beweglichen Anbindung des Schutzrohres (xx) an dem Befestigungselement (x), beispielsweise einem Befestigungstopf ist darin zu sehen, dass damit das Schutzrohr einer Auslenkung des Dämpfungselementes (i), z.B. einer Zusatzfeder relativ zum Befestigungselement (x) "folgen kann" und dennoch ohne Beschädigung der Zusatzfeder bzw. des Dämpfers durch das Schutzrohr ein enger Sitz des Schutzrohres an dem Dämpfer bzw. an der Zusatzfeder möglich ist. Durch den engen Spalt zwischen Dämpfer und Sitz der Zusatzfeder in dem Schutzrohr kann ein Eindringen von Schmutz und Feuchtigkeit besser vermieden werden. Durch die schwenkbare Befestigung des Schutzrohres (xx) an zwei Punkten mit dem Befestigungselement (x) wird eine eindimensionale Beweglichkeit des Schutzrohres erreicht, die in der Regel in Fahrwerken ausreicht. Die bewegliche Befestigung des Schutzrohres an zwei Stellen mit dem Befestigungselement kann durch allgemein bekannte Befestigungsmethoden erreicht werden. Dabei kann das Schutzrohr an zwei Stellen mit dem Befestigungselement (x) verschraubt oder vernietet, oder über Sicherungsringe gehalten sein oder an zwei Stellen an dem Befestigungselement (x) angeklemmt sein. Die beiden Befestigungspunkte liegen sich dabei bevorzugt gegenüber. Die Befestigung des Schutzrohres (xx) an dem Befestigungselement (x) erfolgt bevorzugt derart, dass das Schutzrohr zumindest bis zu einem Winkel von 10°, besonders bevorzugt 7° ausgelenkt, d.h. geschwenkt werden kann, d.h. die Befestigung erfolgt nicht festsitzend, sondern beweglich, bevorzugt über zwei am Gehäuse angebrachte Stege und entsprechende Bohrungen im Schutzrohr wobei das Schutzrohr über die vorstehend genannten Verfahren gesichert wird.

Um ein Eindringen von Feuchtigkeit oder Schmutz zu verhindern kann wie bereits dargestellt das Dämpfungselement (i) bevorzugt an der Innenseite des Schutzrohrs (xx) anliegen.

Bevorzugt sind Federkonstruktionen, bei denen eine Kolbenstange eines Stoßdämpfers an dem Einleger (iv) befestigbar ist und die Kolbenstange in dem Hohlraum des Schutzrohrs (xx) und des Dämpfungselementes (i) positionierbar ist.

Bevorzugt liegt zwischen dem Dämpfungselement (i) und dem Lagerelement (iii) bevorzugt ein Trennelement vor, das Teil des Befestigungselementes (x) sein kann. Dieses Trennelement dient sowohl dem besseren Sitz des Dämpfungselementes in dem Befestigungselement (x) als auch einer Entkopplung der beiden elastischen Elemente (i) und (iii). Um einen möglichst sicheren Sitz des Dämpfungselementes (i) in dem Befestigungselement (x) zu ermöglichen, kann das Befestigungselement (x) einen Rand aufweisen, der bevorzugt passgenau einen Teil des Dämpfungselementes (i) umschließt und damit das Dämpfungselement (i) in dem Befestigungselement (x) fixiert. Bevorzugt wird das Dämpfungselement teilweise, aber nicht vollständig, d.h. über die gesamte Länge in dem Befestigungselement platziert.

Zu den einzelnen Elementen der erfindungsgemäßen Federkonstruktion ist ansonsten Folgendes auszuführen, wobei die Elemente der Federkonstruktion nach allgemein bekannten Verfahren gefertigt werden können oder kommerziell erhältlich sind:

Das Befestigungselement (x) kann auf allgemein bekannten bevorzugt harten Materialien basieren, beispielsweise Metallen, z.B. Aluminium, Stahl, Eisen oder Kupfer, oder harten Kunststoffen, z.B. thermoplastischem Polyurethan, Polyamid, Polyethylen, Polypropylen, Polystyrol oder bevorzugt Polyoxymethylen.

Der Einleger (iv) kann auf allgemein bekannten bevorzugt harten Materialien basieren, beispielsweise Metallen oder harten Kunststoffen, z.B. thermoplastischem Polyurethan, Polyamid, Polyethylen, Polypropylen, Polystyrol oder bevorzugt Polyoxymethylen, besonders bevorzugt Metallen, insbesondere Stahl oder Aluminium. Der äußere Durchmesser des Einlegers (iv) beträgt bevorzugt zwischen 30 mm und 90 mm, besonders bevorzugt zwischen 15 mm und 60 mm.

Das Schutzrohr (xx) kann auf allgemein bekannten Materialien, z.B. Kunststoffen, bevorzugt PE, PP, PA, POM basieren. Die Wandstärke des Schutzrohres kann üblicherweise zwischen 0,5 mm und 3 mm betragen.

Bevorzugt weist das Dämpfungselement (i) mindestens eine umlaufende Einschnürung (xi) auf der äußeren Oberfläche auf. Bevorzugt besitzt das Dämpfungselement (i) an dem dem Befestigungselement (x) abgewandten Ende eine umlaufende Lippe. Der Durchmesser des Dämpfungselementes (i) beträgt bevorzugt zwischen 30 mm und 80 mm. Die Höhe des Dämpfungselementes (i) beträgt bevorzugt zwischen 15 mm und 200 mm, besonders bevorzugt zwischen 15 mm und 150 mm.

Der äußere Durchmesser des bevorzugt runden oder zylindrischen Lagerelementes (iii) beträgt bevorzugt zwischen 60 mm und 120 mm. Der innere Durchmesser, d.h. der Durchmesser des Hohlraumes des Lagerelementes (iii) beträgt bevorzugt zwischen 10 mm und 80 mm. Der Einleger (iv) kann bevorzugt in das Lagerelement (iii) geclipst werden, beispielsweise in eine Kerbe, die auf der inneren Oberfläche des Lagerelementes (iii) vorliegt. Der Einleger (iv) wird somit bevorzugt oberhalb, unterhalb und seitlich vom Lagerelement (iii) umfasst, d.h. der Einleger (iv) hat keinen direkten Kontakt mit dem Befestigungselement (x), sondern zwischen Befestigungselement (x) und Einleger (iv) befindet sich das Lagerelement (iii).

Die Durchmesser der Hohlräume in (iv), (v) und (i) betragen bevorzugt zwischen 10 mm und 80 mm.

Das oder die Lagerelemente (iii) und/oder das Dämpfungselement (i) können auf allgemein bekannten elastischen Materialien, beispielsweise auf Gummi oder zelligen Polyurethanelastomeren basieren. Besonders bevorzugt basieren (iii) und (i) zelligen Polyisocyanat-Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, bevorzugt mit einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm.

Die erfindungsgemäßen Dämpfungselemente (i) und die Lagerelemente (iii) bevorzugt auf Elastomeren auf der Basis von Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zeitigen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird bevorzugt bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden. Die Formteile sind nach 5 bis 60 Minuten ausgehärtet und damit entformbar. Die Menge des in das Formwerkzeug eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

## Patentansprüche

1. Federkonstruktion enthaltend ein Befestigungselement (x), in dem ein hohles Dämpfungselement (i) positioniert ist, sowie ein Schutzrohr (xx), das an dem Befestigungselement (x) befestigt ist und in dem das hohle Dämpfungselement (i) platziert wird, **dadurch gekennzeichnet, dass** das Schutzrohr (xx) beweglich an dem Befestigungselement (x) befestigt ist, wobei das Schutzrohr (xx) an zwei Stellen mit dem Befestigungselement (x) schwenkbar befestigt ist.

2. Federkonstruktion gemäß Anspruch 1, **dadurch gekennzeichnet, dass** in dem Befestigungselement ein Rundlager enthaltend mindestens ein hohles, elastisches Lagerelement (iii) sowie einen Einleger (iv) positioniert ist.

3. Federkonstruktion gemäß Anspruch 1, **dadurch gekennzeichnet, dass** das Schutzrohr (xx) an zwei Stellen mit dem Befestigungselement (x) verschraubt oder vernietet ist oder an zwei Stellen an dem Befestigungselement (x) angeklemmt ist.

4. Federkonstruktion gemäß Anspruch 1, **dadurch gekennzeichnet, dass** das Dämpfungselement (i) an der Innenseite des Schutzrohrs (xx) anliegt.

5. Federkonstruktion gemäß Anspruch 2, **dadurch gekennzeichnet, dass** eine Kolbenstange eines Stoßdämpfers an dem Einleger (iv) befestigbar ist und die Kolbenstange in dem Hohlraum des Schutzrohrs (xx) und des Dämpfungselementes (i) positionierbar ist.

6. Federkonstruktion gemäß Anspruch 1, **dadurch gekennzeichnet, dass** das oder die Lagerelemente (iii) und/oder das Dämpfungselement (i) auf Gummi oder zelligen Polyurethanelastomeren basieren.

7. Automobile enthaltend Federkonstruktion gemäß einem der Ansprüche 1 bis 6.

## Claims

1. A spring structure comprising a securing element (x) in which a hollow damping element (i) has been positioned, and also a protective tube (xx) which has been secured to the securing element (x), and in which the hollow damping element (i) is placed, wherein the protective tube (xx) has been secured in a moveable manner to the securing element (x), where the protective tube (xx) has been secured in a swivelable manner at two sites to the securing element (x).

2. The spring structure according to claim 1, wherein within the securing element a round bearing has been positioned, comprising at least one hollow, elastic bearing element (iii), and also one insert (iv).

3. The spring structure according to claim 1, wherein the protective tube (xx) has been fastened by means of screw threads or riveting at two sites to the securing element (x), or has been clipped at two sites to the securing element (x).

4. The spring structure according to claim 1, wherein the damping element (i) has contact with the inner side of the protective tube (xx).

5. The spring structure according to claim 2, wherein a piston rod of a shock absorber can be secured to the insert (iv), and the piston rod can be positioned within the cavity of the protective tube (xx) and of the damping element (i).

6. The spring structure according to claim 1, wherein the bearing element(s) (iii) and/or the damping element (i) are based on rubber or on cellular polyurethane elastomers.

7. An automobile comprising a spring structure according to any of claims 1 to 6.

## Revendications

1. Structure de suspension contenant un élément de fixation (x), dans lequel est positionné un élément d'amortissement creux (i), ainsi qu'un tube protecteur (xx) qui est fixé sur l'élément de fixation (x) et dans lequel l'élément d'amortissement creux (i) est placé, **caractérisée en ce que** le tube protecteur (xx) est fixé de manière amovible sur l'élément de fixation (x), le tube protecteur (xx) étant fixé de manière à pouvoir pivoter en deux emplacements avec l'élément de fixation (x).

2. Structure de suspension suivant la revendication 1, **caractérisée en ce qu'**un palier rond comportant au moins un élément de palier (iii) élastique creux ainsi qu'un élément inséré (iv) est positionné dans l'élément de fixation.

3. Structure de suspension suivant la revendication 1, **caractérisée en ce que** le tube protecteur (xx) est vissé ou riveté en deux emplacements avec l'élément de fixation (x) ou est serré en deux emplacements sur l'élément de fixation (x).

4. Structure de suspension suivant la revendication 1, **caractérisée en ce que** l'élément d'amortissement (i) est en appui sur la face interne du tube protecteur (xx).

5. Structure de suspension suivant la revendication 2, **caractérisée en ce qu'**une tige de piston d'un amortisseur de choc peut être fixée sur l'élément inséré (iv) et **en ce que** la tige de piston peut être positionnée dans la cavité du tube protecteur (xx) et de l'élément d'amortissement (i).

6. Structure de suspension suivant la revendication 1, **caractérisée en ce que** le ou les éléments de palier (iii) et/ou l'élément d'amortissement (i) sont à base de caoutchouc ou d'élastomères de polyuréthanne cellulaire.

7. Automobiles comportant une structure de suspension suivant l'une des revendications 1 à 6.
